# DEMANDE DE BREVET EUROPEEN

(11) **EP 4 148 553 A1**
(43) Date de publication de la demande: **15.03.2023**
(21) Numéro de dépôt: 22195093.4
(22) Date de dépôt: 12.09.2022
(51) Int. Cl.: G06F 3/16

(54) **DISPOSITIF DE RÉGLAGE DE NIVEAU SONORE**

(30) Priorité: 13.09.2021 FR 2109582
(71) Demandeur: CG Conception, 37100 Tours (FR)
(72) Inventeur: GILAVERT, Clément, 37100 Tours (FR)
(74) Mandataire: Ipside

(57) **Abrégé**

L'invention a pour objet un dispositif de réglage (100) de niveau sonore, adapté pour être connecté à un ordinateur (210) configuré pour exécuter au moins une application logicielle générant ou utilisant un signal sonore, ledit dispositif de réglage comportant au moins un module de sélection et de réglage (110, 120) comprenant :
- un moyen de sélection d'une application logicielle (112, 122) à assigner audit module de sélection et de réglage,
- un moyen de réglage du niveau sonore (113, 123) dudit signal sonore généré ou utilisé par ladite application logicielle assignée audit module de sélection et de réglage, permettant un réglage physique du niveau sonore de l'application logicielle sélectionnée, étant un potentiomètre motorisé apte à être réglé électroniquement par l'intermédiaire d'un signal de commande provenant dudit ordinateur.

L'invention a également pour objet un système informatique (200) et un procédé (400) de réglage de niveau sonore.

## Description

### DOMAINE TECHNIQUE DE L'INVENTION

Le domaine de l'invention est celui des périphériques informatiques destinés à être reliés à un ordinateur.

Plus précisément, l'invention concerne un dispositif de réglage du niveau sonore, adapté pour être connecté à un ordinateur configuré pour exécuter au moins une application logicielle générant ou utilisant un signal sonore.

L'invention trouve notamment des applications dans le cadre d'activités multitâches sur un ordinateur, comme par exemple la pratique de jeux vidéo, d'écoute de musique, de montage vidéo, de visioconférence, de visionnage de vidéos, etc.

### ÉTAT DE LA TECHNIQUE

D'une part, il est connu de la technique antérieure des moyens physiques de réglage du niveau sonore d'un périphérique audio, comme par exemple des potentiomètres rotatifs.

Dans le cas d'un périphérique de sortie audio, le réglage à l'aide d'un potentiomètre rotatif correspond à un réglage du niveau de gain d'un amplificateur électronique du périphérique audio. De cette manière, le niveau sonore du périphérique entier peut être réglé.

D'autre part, il est connu de l'art antérieur des techniques logicielles permettant de contrôler le niveau sonore d'une application exécutée par un ordinateur, ainsi qu'éventuellement de choisir le périphérique d'entrée ou de sortie assigné à l'application.

Ainsi, différentes applications logicielles peuvent avoir chacune des niveaux sonores différents, relativement les unes aux autres, le son issu de chaque application étant toutefois émis par le même périphérique audio (qui peut être lui-même être réglé à un niveau sonore en particulier).

De telles solutions logicielles sont également connues sous le terme de « mélangeur audio » et sont intégrées de manière native sur la majorité des systèmes d'exploitation commercialisés à ce jour.

Toutefois, la combinaison de ces solutions n'est pas pleinement satisfaisante dans le cadre d'activités multitâches sur un ordinateur, notamment lorsqu'une telle activité implique l'utilisation de nombreuses applications logicielles générant ou utilisant des signaux sonores, et éventuellement une pluralité de périphériques audio d'entrée et de sortie, comme par exemple un système d'haut-parleurs, un casque audio et un ou plusieurs microphones.

En effet, il est aujourd'hui généralement possible de régler le niveau sonore d'une application logicielle par le biais d'un mélangeur audio logiciel, et éventuellement d'assigner le périphérique audio souhaité à ladite application logicielle, toutefois cette opération implique de nombreuses étapes de sélection à l'écran (généralement une séquence d'au moins trois ou quatre « clics » de souris informatique). Une telle opération a pour effet de perturber fortement l'activité d'un utilisateur de l'ordinateur, en raison du temps nécessaire pour exécuter les étapes, et en raison de la gêne visuelle induite par l'affichage du mélangeur audio logiciel à l'écran de l'ordinateur. De plus, il peut être nécessaire de restaurer des fenêtres se trouvant en plein écran avant une telle opération, ce qui a pour effet de perturber encore davantage l'activité poursuivie. En général, l'accès au mélangeur audio nécessite de réduire des fenêtres d'application, ou à quitter un affichage en plein écran, ce qui a fréquemment pour effet de couper le son généré par l'application, résultant en une impossibilité pour l'utilisateur d'apprécier le niveau sonore réglé, et nécessitant alors une série d'opérations de réglage avant d'atteindre le niveau sonore souhaité. Un tel ajustement est particulièrement laborieux et perturbant pour l'utilisateur. Enfin, dans l'intervalle de temps nécessaire au réglage du niveau sonore, il est pratiquement impossible pour l'utilisateur de poursuivre son activité, toute son attention étant orientée vers l'opération de réglage du niveau sonore.

Ainsi, aucun des systèmes actuels ne permet de répondre simultanément à tous les besoins requis, à savoir de proposer une technique de réglage de niveau sonore d'une application logicielle donnée qui soit simple et intuitive, sans perturber l'activité d'un utilisateur de l'ordinateur.

### EXPOSÉ DE L'INVENTION

La présente invention vise à remédier à tout ou partie des inconvénients de l'état de la technique cités ci-dessus.

À cet effet, l'invention vise un dispositif de réglage de niveau sonore, adapté pour être connecté à un ordinateur configuré pour exécuter au moins une application logicielle générant ou utilisant un signal sonore, ledit dispositif de réglage comportant au moins un module de sélection et de réglage comprenant :
- un moyen de sélection d'une application logicielle à assigner audit module de sélection et de réglage,
- un moyen de réglage du niveau sonore dudit signal sonore généré ou utilisé par ladite application logicielle assignée audit module de sélection et de réglage, permettant un réglage physique du niveau sonore de l'application logicielle sélectionnée, le moyen de réglage du niveau sonore étant un potentiomètre motorisé, apte à être réglé électroniquement par l'intermédiaire d'un signal de commande provenant dudit ordinateur, de façon à permettre une communication d'informations bidirectionnelle entre le dispositif de réglage et ledit ordinateur.

Grâce à ces dispositions, il est obtenu un dispositif permettant de régler de manière physique, en particulier de manière manuelle, sans perturbation à l'écran de l'ordinateur, le niveau sonore de toute application exécutée sur l'ordinateur. La présence d'un moyen de sélection d'une application logicielle autorise une assignation d'une application quelconque à un module de sélection et de réglage, de manière physique et sans intervenir à l'écran, ainsi toutes les applications peuvent être réglées à l'aide du dispositif selon l'invention. Dans le cas de la présence de plusieurs modules de sélection et de réglage, chaque module permet le réglage d'une application différente, augmentant ainsi le nombre d'application pouvant être réglées simultanément.

De plus, grâce au potentiomètre motorisé, une identification visuelle immédiate du niveau sonore de l'application logicielle est possible, et une correspondance exacte entre le positionnement du moyen de réglage du niveau sonore du périphérique d'entrée ou de sortie audio et le niveau sonore de l'application associée est conservée.

Une communication d'informations bidirectionnelle entre le dispositif de réglage et l'ordinateur est obtenue au moyen du ou des potentiomètres motorisés. En effet, le potentiomètre peut à la fois régler un volume sonore, c'est-à-dire transmettre une information vers l'ordinateur, et être réglé selon un réglage de volume sonore logiciel, c'est-à-dire recevoir et représenter une information reçue par l'ordinateur. La communication d'informations est ainsi électronique (par les signaux électriques envoyés par le potentiomètre, et envoyés vers le moteur du potentiomètre motorisé) et visuelle (l'information du niveau sonore actuellement réglé étant représenté par la position du potentiomètre lorsqu'il est manipulé, ou déplacé au moyen de son moteur).

Ainsi, le dispositif de réglage constitue un mélangeur audio physique qui peut se substituer à un mélanger audio logiciel, et ce même sur plusieurs sessions d'utilisation. De plus, lorsque le dispositif de réglage est déconnecté, et qu'un mélangeur audio logiciel a été utilisé, le dispositif de réglage peut être utilisé instantanément en reproduisant physiquement les paramètres de réglage actuels.

Selon une variante préférentielle, l'ordinateur est en outre configuré pour être connecté à au moins un périphérique d'entrée ou de sortie audio, dans lequel au moins un module de sélection et de réglage comprend également un moyen de sélection d'un périphérique d'entrée ou de sortie audio à assigner audit module de sélection et de réglage, de manière à réaliser une association entre ledit périphérique d'entrée ou de sortie audio sélectionné et ladite application logicielle sélectionnée.

Ainsi, il est également possible de sélectionner un périphérique audio devant être associé à une application donnée par un actionnement physique, permettant ainsi de s'affranchir d'une sélection logicielle qui risquerait de perturber l'activité d'un utilisateur.

Selon un mode de réalisation particulier, le moyen de sélection d'un périphérique d'entrée ou de sortie audio d'un module de sélection et de réglage est choisi parmi une molette rotative, un ou plusieurs boutons poussoirs, un écran tactile, un ou plusieurs boutons tactiles.

Selon un mode de réalisation particulier, le moyen de sélection d'une application logicielle d'un module de sélection et de réglage est choisi parmi une molette rotative, un ou plusieurs boutons poussoirs, un écran tactile, un ou plusieurs boutons tactiles.

Selon un mode de réalisation particulier, le moyen de réglage du niveau sonore du périphérique d'entrée ou de sortie audio est choisi parmi un potentiomètre linéaire motorisé et un potentiomètre rotatif motorisé.

L'invention a également pour objet un système informatique comprenant :
- un ordinateur configuré pour exécuter au moins une application logicielle générant ou utilisant un signal sonore,
- au moins un périphérique d'entrée ou de sortie audio connecté audit ordinateur,
- un dispositif de réglage selon l'invention, connecté audit ordinateur.

L'invention a également pour objet un procédé de réglage de niveau sonore au moyen d'un dispositif de réglage selon l'invention, comprenant :
- une étape d'actionnement dudit moyen de sélection d'une application logicielle, jusqu'à sélection d'une application logicielle cible,
- une étape d'actionnement dudit moyen de réglage du niveau sonore du périphérique d'entrée ou de sortie audio, jusqu'à réglage d'un niveau sonore cible.

Selon une variante, le procédé comprend en outre une étape d'actionnement dudit moyen de sélection d'un périphérique d'entrée ou de sortie audio, jusqu'à sélection d'un périphérique cible.

### BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :
- La [Fig 1] est une représentation schématique en perspective du dispositif de réglage selon l'invention, composé ici de deux modules de sélection et de réglage,
- La [Fig 2] est une représentation schématique d'un système informatique selon l'invention, comprenant un dispositif de réglage selon l'invention,
- La [Fig 3] est une représentation schématique d'un mélangeur audio logiciel de l'art antérieur, tel qu'affiché sur un écran d'ordinateur,
- La [Fig 4] est un logigramme du procédé de réglage selon l'invention.

### DESCRIPTION DÉTAILLÉE DE L'INVENTION

La présente description est donnée à titre non limitatif, chaque caractéristique d'un mode de réalisation pouvant être combinée à toute autre caractéristique de tout autre mode de réalisation de manière avantageuse.

On note, dès à présent, que les figures ne sont pas à l'échelle.

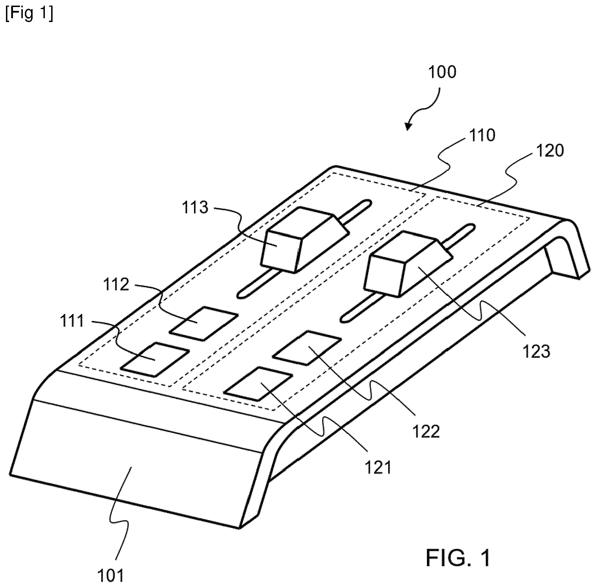

Comme cela est représenté à la figure 1, selon un premier mode de réalisation, un dispositif de réglage 100 comprend un premier module de sélection et de réglage 110 et un second module de sélection et de réglage 120, agencés sur un boitier 101 du dispositif de réglage 100. Un tel boitier 101 est par exemple de forme globalement parallélépipédique rectangle, par exemple en matière plastique ou métallique, et est adapté pour reposer notamment sur une table de bureau, et pouvant à cette fin être muni de tampons antidérapants sur sa face inférieure.

Chacun des modules de sélection et de réglage 110, respectivement 120, comprend un moyen de sélection d'un périphérique d'entrée ou de sortie audio 111, respectivement 121, un moyen de sélection d'une application logicielle 112, respectivement 122, et un moyen de réglage du niveau sonore du périphérique d'entrée ou de sortie audio 113, respectivement 123.

En particulier, les moyens de sélection d'un périphérique d'entrée ou de sortie audio 111 et 121, ainsi que les moyens de sélection d'une application logicielle 112 et 122 sont des boutons poussoirs, et les moyens de contrôle du niveau sonore du périphérique d'entrée ou de sortie audio 113 et 123 sont des potentiomètres linéaires, prenant la forme de boutons de commande linéaire.

Toutefois, toute autre combinaison de types de moyens de sélection et de moyens de contrôle est envisageable, et les modules de sélection et de contrôle peuvent différer l'un de l'autre, comme il sera vu par la suite.

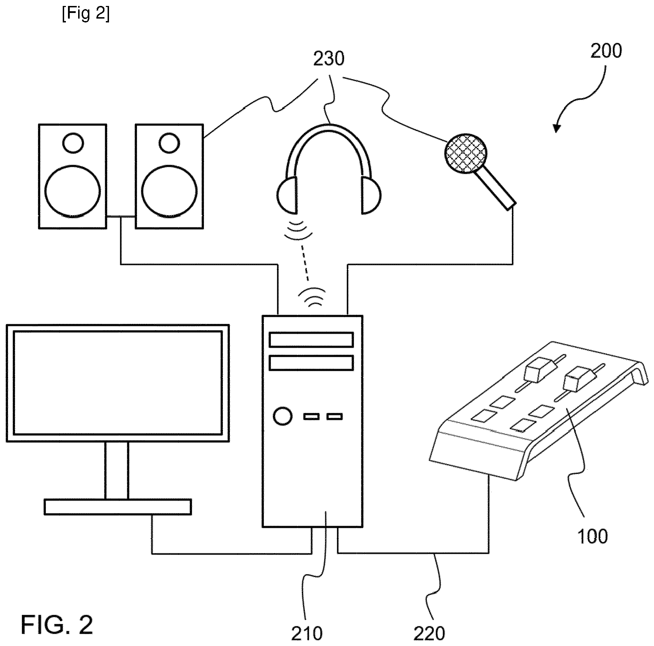

Le dispositif de réglage 100 étant destiné à faire partie d'un système informatique 200 comprenant un ordinateur 210, il est muni de moyens de connexion à un ordinateur, comme cela est représenté sur la figure 2. De tels moyens de connexion peuvent être des moyens de connexion filaire 220, constitués par exemple par un câble de type USB, amovible ou non, destiné à être branché par une extrémité à un port USB de l'ordinateur. De tels moyens de connexion peuvent également être des moyens de connexion sans fil (non représentés), adaptés pour établir par exemple une connexion selon les standards Bluetooth (marque déposée), Wifi (marque déposée) ou encore au moyen d'une connexion sans fil propriétaire, à l'aide d'un récepteur sans fil pouvant par exemple être branché sur un port USB de l'ordinateur. Bien entendu, le cumul de moyens filaires et sans fil est également envisageable, de façon à laisser le choix du type de connexion à un utilisateur, et pour autoriser l'utilisation du dispositif de réglage avec des appareils ne disposant que de l'une ou l'autre des connectiques.

L'ordinateur 210 est configuré pour exécuter au moins une application logicielle générant ou utilisant un signal sonore, comme par exemple un logiciel informatique de visioconférence (générant et utilisant un signal sonore), un jeu vidéo (générant, et potentiellement utilisant un signal sonore), un logiciel de lecture vidéo ou audio (générant un signal sonore), un logiciel d'enregistrement vidéo ou audio (utilisant un signal sonore), etc.

Afin de diffuser et/ou de capter une information sonore, l'ordinateur 210 est connecté à au moins un périphérique d'entrée ou de sortie audio 230. Des périphériques d'entrée peuvent par exemple être un microphone, ou une caméra intégrant un microphone, ou plus généralement tout périphérique pouvant être branché sur une entrée de ligne générique d'un ordinateur 210, tandis que des périphériques de sortie peuvent être un système d'haut-parleurs ou un casque audio, ou plus généralement tout périphérique pouvant être branché à une sortie de ligne générique d'un ordinateur 210. De tels périphériques peuvent être connectés à l'ordinateur de manière filaire ou sans fil (en pointillés sur la figure 2), lorsqu'il s'agit de périphériques externes, ou être intégrés à un ordinateur, lorsqu'il s'agit de périphériques internes, comme dans le cas de hauts parleurs et/ou caméra intégrés à un ordinateur portable. Les périphérique audio internes sont donc également considérés comme étant des périphériques 230 aptes à être connectés à l'ordinateur 210, bien que leur connexion soit généralement préétablie sans possibilité de connexion ou déconnexion manuelle par un utilisateur.

Le dispositif de réglage 100 étant destiné à interagir directement avec le système d'exploitation de l'ordinateur 210 auquel il est connecté, il est prévu dans le cadre de la présente invention un logiciel informatique exécuté par l'ordinateur 210, c'est-à-dire un pilote informatique (ou « driver » selon la terminologie anglaise), configuré pour établir une communication entre le dispositif de réglage 100 et le système d'exploitation de l'ordinateur 210.

Plus précisément, le pilote informatique est configuré pour communiquer avec une application logicielle de gestion des périphériques sonores et des applications utilisant lesdits périphériques, généralement appelée « mélangeur audio ». Une telle application logicielle est intégrée nativement dans la plupart des systèmes d'exploitation connus.

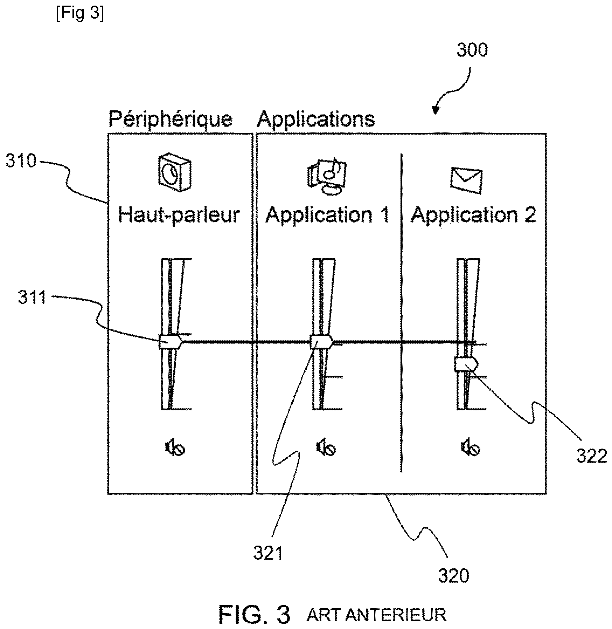

Comme cela est représenté à la figure 3, l'interface graphique 300 d'un mélangeur audio logiciel de l'art antérieur comprend généralement une première zone 310 de contrôle du niveau sonore global d'un périphérique, et une seconde zone 320 de contrôle du niveau sonore de chacune des applications utilisant ledit périphérique. Un utilisateur de l'ordinateur 200 peut contrôler lesdits niveaux sonores par une opération de « cliquer-glisser » à l'aide de curseurs virtuels 311, 321, 322.

Le dispositif de réglage 100 selon l'invention constitue un mélangeur audio physique permettant de s'affranchir d'un mélangeur audio logiciel tel que décrit ci-dessus. Cependant, il est parfaitement envisageable de faire coexister le dispositif de réglage 100 et un mélangeur audio selon l'art antérieur, comme cela sera vu par la suite.

Chaque moyen de réglage du niveau sonore du périphérique d'entrée ou de sortie audio 113, respectivement 123, joue le rôle d'un curseur virtuel 321, 322. On comprend donc qu'il est possible de régler précisément le volume sonore d'entrée ou de sortie audio pour chaque application assignée actuellement à chaque module de sélection et de réglage 110, et 120. On comprend donc que le rôle du logiciel pilote informatique est notamment de traduire le signal issu d'un actionnement du moyen de réglage du niveau sonore du périphérique d'entrée ou de sortie audio 113 ou 123 en un déplacement d'un curseur virtuel 321 ou 322.

Selon le mode de réalisation considéré, le dispositif de réglage 100 dispose de deux modules de sélection et de contrôle 110 et 120, c'est-à-dire que seul le niveau sonore de deux applications peut être réglé simultanément. Afin de pallier à cet inconvénient, les moyens de sélection d'une application logicielle 112, et 122 permettent d'assigner une application logicielle en particulier à un module de sélection de contrôle 110, et 120.

Selon un exemple, un appui sur un moyen de sélection d'une application logicielle 112 ou 122 permet d'assigner l'application suivante dans une liste d'applications exécutées actuellement par l'ordinateur. Une telle liste peut être établie selon un ordre arbitraire, un ordre alphabétique, un ordre de lancement des applications, un ordre de fréquence d'utilisation ou encore un ordre d'importance de temps d'utilisation. Une telle liste peut également prendre la forme d'une boucle fermée, reprenant le premier élément de la liste après avoir atteint le dernier élément de la liste. Il est également possible de prévoir un élément « vide » dans la liste, c'est-à-dire de ne sélectionner aucune application à assigner à un module de sélection et de réglage 110 ou 120. Dans ce dernier cas, il est possible de prévoir que lorsqu'aucune application logicielle en particulier n'est sélectionnée, il soit possible de contrôler le volume sonore du périphérique audio entier, c'est-à-dire indépendamment des applications logicielles qui l'utilisent. En d'autres termes, une association entre le périphérique audio entier et un module de sélection et de réglage 110 ou 120 est ainsi possible.

Afin de faciliter l'identification de l'application logicielle actuellement assignée au module de sélection et de réglage 110 ou 120, il est possible de prévoir l'affichage d'une information visuelle éphémère, couramment appelée « notification », apparaissant par exemple en bordure de l'écran de l'ordinateur, informant de l'application actuellement sélectionnée immédiatement après appui sur le moyen de sélection d'une application logicielle 112 ou 122.

De la même manière, il est possible de prévoir des dispositions identiques lors d'un appui sur un moyen de sélection d'un périphérique d'entrée ou de sortie audio 111 ou 121, en assignant un périphérique audio, tel des haut-parleurs, un casque, un microphone, à un module de sélection et de réglage 110 ou 120.

Ainsi, après appuis successifs sur le moyen de sélection d'un périphérique d'entrée ou de sortie audio 111 ou 121 et sur le moyen de sélection d'une application logicielle 112 ou 122, il est possible de réaliser l'association entre le périphérique d'entrée ou de sortie audio sélectionné et l'application logicielle souhaitée, parmi toutes les combinaisons possibles.

On précise qu'il n'y a pas d'ordre préférentiel dans la sélection du périphérique audio et la sélection de l'application logicielle. Ainsi, selon une première variante, il est possible d'actionner le moyen de sélection d'un périphérique d'entrée ou de sortie audio 111 ou 121 afin de choisir un périphérique, puis d'actionner le moyen de sélection d'une application logicielle 112 ou 122, afin de sélectionner l'application qui serait diffusée par le biais du périphérique choisi. Selon une seconde variante, il est possible d'actionner le moyen de sélection d'une application logicielle 112 ou 122, afin de sélectionner une application, puis d'actionner le moyen de sélection d'un périphérique d'entrée ou de sortie audio 111 ou 121 afin d'affecter un périphérique à l'application choisie. En d'autres termes, il est possible de sélectionner une application, respectivement un périphérique, puis d'affecter un périphérique, respectivement une application, de manière indifférente, le résultat étant dans les deux cas une association entre un périphérique donné et une application donnée.

On comprend que dans le premier exemple de réalisation, deux associations différentes peuvent coexister. Il apparaît à l'évidence qu'en augmentant le nombre de modules de sélection et de contrôle sur le dispositif de réglage 100, il est possible d'augmenter le nombre d'associations pouvant coexister simultanément. Une telle augmentation du nombre de modules a pour avantage de nécessiter moins de manipulations dans le cas d'un nombre important d'applications logicielles, toutefois au détriment de la compacité du dispositif de réglage 100. Il apparaît qu'un compromis intéressant entre confort d'utilisation et encombrement est obtenu pour deux à quatre modules de sélection et de contrôle, de manière à pouvoir réaliser deux à quatre associations simultanément, tout en gardant des dimensions du dispositif de réglage 100 raisonnables pour une utilisation confortable par un utilisateur.

Il est particulièrement avantageux de choisir des potentiomètres motorisés comme moyens de contrôle du niveau sonore du périphérique d'entrée ou de sortie audio 113 et 123.

Par exemple, un potentiomètre motorisé peut être un potentiomètre linéaire motorisé, aussi appelé « fader », tel que représenté sur les figures. Un tel potentiomètre linéaire motorisé est préféré en raison de l'identification visuelle particulièrement aisée de sa position de réglage.

Selon un autre exemple, un potentiomètre motorisé peut être un potentiomètre rotatif motorisé.

De cette manière, lorsqu'une nouvelle application est assignée à un module de sélection et de réglage 110 ou 120, via un appui sur l'un des moyens de sélection d'une application logicielle 112 ou 122, le potentiomètre linéaire se positionne automatiquement à un niveau correspondant au niveau sonore de l'application nouvellement associée au module de sélection et de réglage 110 ou 120.

Un tel positionnement automatique a pour effet de permettre une identification visuelle immédiate du niveau sonore de l'application logicielle, et a pour effet de conserver une correspondance exacte entre le positionnement du moyen de réglage du niveau sonore du périphérique d'entrée ou de sortie audio 113 et 123 et le niveau sonore de l'application associée.

A titre d'exemple, lorsqu'une première application est réglée à un niveau sonore de 50%, le bouton de commande du potentiomètre linéaire est situé en position centrale, à mi-chemin entre ses positions extrêmes. Lors d'une nouvelle association d'une seconde application logicielle au module de sélection et de réglage considéré, la seconde application logicielle étant par exemple réglée à un niveau sonore de 10%, le bouton de commande se déplace jusqu'à une position basse, située à 10% de la distance totale entre les positions extrêmes du potentiomètre linéaire motorisé. Ainsi, une position extrême basse du bouton de commande du potentiomètre linéaire correspond toujours à un niveau sonore de 0%, et une position extrême haute correspond toujours à un niveau sonore de 100%, avec un accroissement du niveau sonore linéaire entre ces deux positions extrêmes.

Un autre avantage d'un potentiomètre, par exemple linéaire, motorisé est la conservation de la correspondance exacte entre le bouton de commande du potentiomètre et le niveau sonore de l'application associée, lorsque le niveau sonore est réglé directement dans le mélangeur audio logiciel, le potentiomètre linéaire motorisé se déplaçant simultanément au réglage dans le mélangeur audio logiciel.

En d'autres termes, grâce à une communication bidirectionnelle entre le mélangeur audio logicielle de l'ordinateur et le dispositif de réglage 100, une correspondance exacte entre le potentiomètre, par exemple linéaire, et le niveau sonore d'une application est obtenue à tout instant.

Il est toutefois possible de prévoir un mode de fonctionnement dans lequel la communication bidirectionnelle est désactivée, seule la communication unidirectionnelle du dispositif de réglage 100 vers l'ordinateur étant maintenue, de façon à préserver les ressources de calcul du processeur de l'ordinateur.

Comme il a été vu plus en amont, les moyens de sélection d'un périphérique d'entrée ou de sortie audio 111 et 121, ainsi que les moyens de sélection d'une application logicielle 112 et 122 peuvent être un ou plusieurs boutons poussoirs, mais également une molette rotative, un écran tactile, un ou plusieurs boutons tactiles. Les moyens de contrôle du niveau sonore du périphérique d'entrée ou de sortie audio 113 et 123 peuvent consister chacun en un potentiomètre linéaire, un potentiomètre rotatif, une molette rotative, un ou plusieurs boutons poussoirs, un écran tactile, un ou plusieurs boutons tactiles.

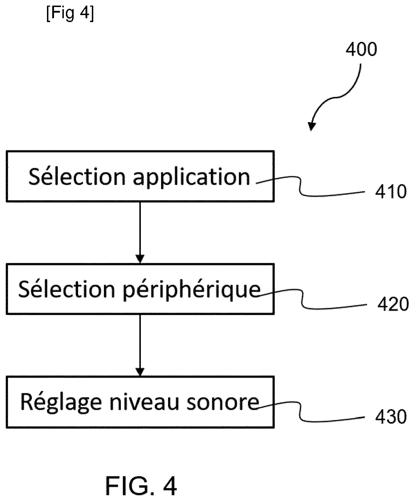

Conformément à la description faite ci-dessus, l'invention a également pour objet un procédé 400 de réglage de niveau sonore au moyen d'un dispositif de réglage 100 selon l'invention, représenté sous forme de logigramme à la figure 4, qui comprend :
- une étape 410 d'actionnement du moyen de sélection d'une application logicielle 112 ou 122, jusqu'à sélection d'une application logicielle cible,
- une étape 430 d'actionnement du moyen de réglage du niveau sonore du périphérique d'entrée ou de sortie audio 113 ou 123, jusqu'à réglage d'un niveau sonore cible.

En particulier, l'étape 410 d'actionnement permet de sélectionner une application logicielle exécutée sur l'ordinateur pendant l'utilisation du dispositif de réglage 100, en temps réel, sans nécessiter de préréglage préalable, et sans nécessiter d'effectuer de manipulation à l'écran de l'ordinateur.

Lorsque le dispositif de réglage 100 comprend un moyen de sélection d'un périphérique d'entrée ou de sortie audio, le procédé 400 comprend également une étape 420 d'actionnement du moyen de sélection d'un périphérique d'entrée ou de sortie audio 111, ou 12, jusqu'à sélection d'un périphérique cible.

L'application cible, le périphérique audio cible et le niveau sonore cible sont choisis par l'utilisateur, selon l'utilisation souhaitée.

Conformément à ce qui a été évoqué ci-dessus, en fonction du choix de moyen de sélection, l'actionnement prend la forme d'un appui successif sur un bouton poussoir, du défilement d'une molette, de tracés digitaux sur un écran tactile, etc. Il en est de même pour le moyen de réglage de niveau sonore, l'actionnement pouvant être le glissement d'un bouton, la rotation d'un bouton, etc.

Bien entendu, ces étapes sont réalisables en parallèle, ou séquentiellement, pour chaque module de sélection et de réglage 110 et 120.

Enfin, les étapes 410 et 420 peuvent être exécutées l'une avant l'autre ou l'une après l'autre, l'association entre un périphérique et une application étant possible indifféremment de l'ordre d'exécution de ces étapes, conformément à ce qui a été décrit plus en amont.

### Exemple d'un autre mode de réalisation particulier

Dans un mode de réalisation particulier, dit mode de réalisation minimal, le dispositif de réglage 100 ne comprend qu'un seul module de sélection et de réglage 110. Le module de sélection et de réglage 110 unique ne comprend qu'un moyen de sélection d'une application logicielle 112 et un moyen de réglage du niveau sonore du périphérique d'entrée ou de sortie audio 113.

Un tel mode de réalisation minimal autorise toutes les associations entre une application logicielle et un périphérique audio donné, via l'actionnement du moyen de sélection d'une application logicielle 112, mais nécessite une manipulation logicielle pour modifier le choix du périphérique audio associé. Un tel mode de réalisation minimal est particulière adapté pour des utilisations n'impliquant qu'un faible nombre, voir un seul, périphérique audio, et/ou lorsque l'espace disponible est restreint, par exemple sur une table de bureau de taille réduite, et/ou lorsqu'une utilisation peu intensive du dispositif est faite.

### Autres avantages et caractéristiques optionnelles

De manière optionnelle, il est possible de prévoir un moyen de mise en marche et d'arrêt du dispositif de réglage 100. Un tel moyen peut par exemple prendre la forme d'un commutateur, notamment à bascule, disposé sur la périphérie du dispositif de réglage 100. Un voyant lumineux indiquant la mise en marche du dispositif, et/ou un voyant de connexion à l'ordinateur, peuvent également être prévus.

Dans le cas d'un dispositif de réglage 100 connecté sans fil à l'ordinateur, c'est-à-dire ne pouvant bénéficier d'une alimentation en provenance de l'ordinateur (par exemple par connexion USB), et en particulier lorsqu'un moyen de réglage du niveau sonore du périphérique d'entrée ou de sortie audio est un potentiomètre motorisé, le dispositif 100 est muni d'une batterie rechargeable, amovible ou non, d'un emplacement pour une ou plusieurs piles électriques, d'un panneau photovoltaïque, ou encore d'une prise de branchement d'un bloc d'alimentation filaire, de façon à disposer d'une source d'énergie pouvant mouvoir le potentiomètre motorisé et permettant la transmission d'informations via une connexion sans fil. Dans ce cas, un témoin lumineux du niveau de charge ou d'alimentation électrique peut également être prévu.

Selon une variante, le dispositif de réglage 100 peut être associé physiquement à un clavier d'ordinateur, dans la continuité de celui-ci, de manière à regrouper de manière compacte les fonctions natives du clavier et celles du dispositif de réglage 100. Pour cela, il peut être prévu un moyen d'accrochage universel du boitier 101 au clavier, ou spécifique selon le type de clavier, de façon à pouvoir solidariser ou désolidariser le dispositif de réglage 100 du clavier. Selon une autre variante, le dispositif de réglage 100 peut être directement intégré à demeure dans un clavier d'ordinateur, le boitier 101 faisant alors partie du corps du clavier.

## Revendications

1. Dispositif de réglage (100) de niveau sonore, adapté pour être connecté à un ordinateur (210) configuré pour exécuter au moins une application logicielle générant ou utilisant un signal sonore, ledit dispositif de réglage comportant au moins un module de sélection et de réglage (110, 120) comprenant :
• un moyen de sélection d'une application logicielle (112, 122) à assigner audit module de sélection et de réglage,
• un moyen de réglage du niveau sonore (113, 123) dudit signal sonore généré ou utilisé par ladite application logicielle assignée audit module de sélection et de réglage, permettant un réglage physique du niveau sonore de l'application logicielle sélectionnée,
**caractérisé en ce que** le moyen de réglage du niveau sonore (113, 123) est un potentiomètre motorisé, apte à être réglé électroniquement par l'intermédiaire d'un signal de commande provenant dudit ordinateur,
de façon à permettre une communication d'informations bidirectionnelle entre le dispositif de réglage et ledit ordinateur.

2. Dispositif (100) selon la revendication 1, ledit ordinateur (210) étant en outre configuré pour être connecté à au moins un périphérique d'entrée ou de sortie audio (230), dans lequel au moins un module de sélection et de réglage (110, 120) comprend également un moyen de sélection d'un périphérique d'entrée ou de sortie audio (111, 121) à assigner audit module de sélection et de réglage, de manière à réaliser une association entre ledit périphérique d'entrée ou de sortie audio (230) sélectionné et ladite application logicielle sélectionnée.

3. Dispositif (100) selon la revendication 2, dans lequel le moyen de sélection d'un périphérique d'entrée ou de sortie audio (111, 121) est choisi parmi une molette rotative, un ou plusieurs boutons poussoirs, un écran tactile, un ou plusieurs boutons tactiles.

4. Dispositif (100) selon l'une quelconque des revendications 1 à 3, dans lequel le moyen de sélection d'une application logicielle (112, 122) est choisi parmi une molette rotative, un ou plusieurs boutons poussoirs, un écran tactile, un ou plusieurs boutons tactiles.

5. Dispositif (100) selon l'une quelconque des revendications 1 à 4, dans lequel le moyen de réglage du niveau sonore (113, 123) est choisi parmi un potentiomètre linéaire motorisé et un potentiomètre rotatif motorisé.

6. Système informatique (200) comprenant :
- un ordinateur (210) configuré pour exécuter au moins une application logicielle générant ou utilisant un signal sonore,
- au moins un périphérique d'entrée ou de sortie audio (230) connecté audit ordinateur,
- un dispositif de réglage (100) selon l'une des revendications 1 à 5, connecté audit ordinateur.

7. Procédé (400) de réglage de niveau sonore au moyen d'un dispositif selon l'une des revendications 1 à 5, comprenant :
- une étape (410) d'actionnement dudit moyen de sélection d'une application logicielle (112, 122), jusqu'à sélection d'une application logicielle cible,
- une étape (430) d'actionnement dudit moyen de réglage du niveau sonore du périphérique d'entrée ou de sortie audio (113, 123), jusqu'à réglage d'un niveau sonore cible.

8. Procédé (400) de réglage selon la revendication 7, comprenant en outre une étape (420) d'actionnement dudit moyen de sélection d'un périphérique d'entrée ou de sortie audio (111, 121), jusqu'à sélection d'un périphérique cible.
